(19) Europäisches Patentamt

European Patent Office

Office européen des brevets

(11) **EP 3 703 228 A1**

(12) **EUROPEAN PATENT APPLICATION**
published in accordance with Art. 153(4) EPC

(43) Date of publication:
02.09.2020 Bulletin 2020/36

(51) Int Cl.:
*H02K 3/493* (2006.01)    *H02K 1/16* (2006.01)
*H02K 1/22* (2006.01)    *H02K 1/32* (2006.01)

(21) Application number: 18870575.0

(22) Date of filing: 22.08.2018

(86) International application number:
PCT/JP2018/031016

(87) International publication number:
WO 2019/082488 (02.05.2019 Gazette 2019/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.10.2017 JP 2017207192

(71) Applicant: Hitachi Industrial Products, Ltd.
Tokyo 1010022 (JP)

(72) Inventors:
• SUGIMOTO, Shinji
Tokyo 100-8280 (JP)
• TAKAHASHI, Akeshi
Tokyo 100-8280 (JP)
• NISHIHAMA, Kazuo
Tokyo 100-8280 (JP)
• TAMURA, Tatsuhiro
Tokyo 100-8280 (JP)

(74) Representative: MERH-IP Matias Erny Reichl
Hoffmann
Patentanwälte PartG mbB
Paul-Heyse-Strasse 29
80336 München (DE)

(54) **ROTARY ELECTRIC MACHINE AND ELECTRICAL MOTOR VEHICLE PROVIDED WITH SAME**

(57)    A problem found in the prior art has been that, while a harmonic loss is reduced by a magnetized wedge, a copper loss increases due to an increase of current because of larger gap width as against slot width and, consequently, the total loss increases. The present invention is intended to provide a rotary electric machine in which the harmonic loss and the copper loss are reduced to improve efficiency. To this end, the present invention resides in a rotary electric machine including a stator 101 and a rotor 105 housed in the stator 101 with a gap in between, the stator 101 including stator windings 103 and a stator core 102, the stator core 102 including stator slots 123 to house the stator windings 103, an opening portion being formed in each of the stator slots 123 and a wedge 124 to hold the stator windings 103 being provided in the opening portion, wherein the wedge 124 is magnetized and a ratio of width S of each stator slot 123 to gap width $\delta$, i.e., S/$\delta$ is adapted to range from 6 to 11.

FIG. 6

**Description**

Technical Field

The present invention relates to a rotary electric machine and an electrical motor vehicle provided with same.

Background Art

Generally, contributing factors of loss in a rotary electric machine are roughly divided into a copper loss occurring when current flows through stator windings, an iron loss occurring in the stator and rotor cores, a mechanical loss occurring by rotation, and a stray load loss occurring in a gap surface between the stator and the rotor.
In a rotary electric machine, a high-frequency eddy current occurs in the gap surface between the stator and the rotor due to the pulsation of a gap flux density attributed to the number of slots of the stator and the rotor and this results in a harmonic loss. This harmonic loss is included in the stray load loss.
A method of reducing these losses is disclosed in, for example, PTL 1. PTL 1 discloses a technology in which a magnetized wedge is placed to protrude from the surface of a stator core into the gap. Patent Literature 1 also discloses that slot width was set at 11.4 mm and gap width 6 mm.

Citation List

Patent Literature

PTL 1: Japanese Patent Application Laid-Open No. 2004-312868

Summary of Invention

Technical Problem

However, a problem found in the technology described in PTL 1 is that, while the harmonic loss is reduced by the magnetized wedge, the copper loss increases due to an increase of current because of larger gap width as against the slot width and, consequently, the total loss increases.
An object of the present invention is to solve the abovementioned problem and provide a rotary electric machine in which the harmonic loss and the copper loss are reduced to improve efficiency.

Solution to Problem

To achieve the foregoing object, a feature of the present invention resides in a rotary electric machine including a stator and a rotor housed in the stator with a gap in between, the stator including stator windings and a stator core, the stator core including stator slots to house the stator windings, an opening portion being formed in each of the stator slots and a wedge to hold the stator windings being provided in the opening portion, wherein the wedge is magnetized and a ratio of width S of each of the stator slots to gap width $\delta$, i.e., S/$\delta$ is adapted to range from 6 to 11.

Advantageous Effects of Invention

According to the present invention, it is possible to provide a rotary electric machine in which the harmonic loss and the copper loss are reduced to improve efficiency.

Brief Description of Drawings

Figure 1 is a cross-sectional view of a rotary electric machine cut along an axial direction, pertaining to Example 1 of the present invention.
Figure 2 is a cross-sectional view of the rotary electric machine cut along a direction orthogonal to the axial direction, pertaining to Example 1 of the present invention.
Figure 3 is a diagram representing a relation between a ratio of stator slot width S to gap width $\delta$ between a stator and a rotor pertaining to Example 1 of the present invention and a total value of loss.
Figure 4 represents a relation between flux densities Bmax and Mmin occurring across the gap width.

Figure 5 is an enlarged view of a stator for which a non-magnetized wedge is applied, a slot portion of the rotor, and teeth portions.

Figure 6 is an enlarged view of the stator pertaining to Example 1 of the present invention, a rotor slot, and teeth portions.

Figure 7 is a cross-sectional view of a rotary electric machine cut along a direction orthogonal to the axial direction, pertaining to Example 2 of the present invention.

Figure 8 is an enlarged cross-sectional view of a stator slot pertaining to Example 3 of the present invention.

Figure 9 is a structural diagram of a railway vehicle in which a rotary electric machine pertaining to Example 4 of the present invention is used.

Description of Embodiments

In the following, examples of a rotary electric machine pertaining to the present invention will be described, based on the drawings. The present invention is not limited to the following examples and the scope of the invention embraces a variety of modifications and applications as well in the technical concept of the invention.

Example 1

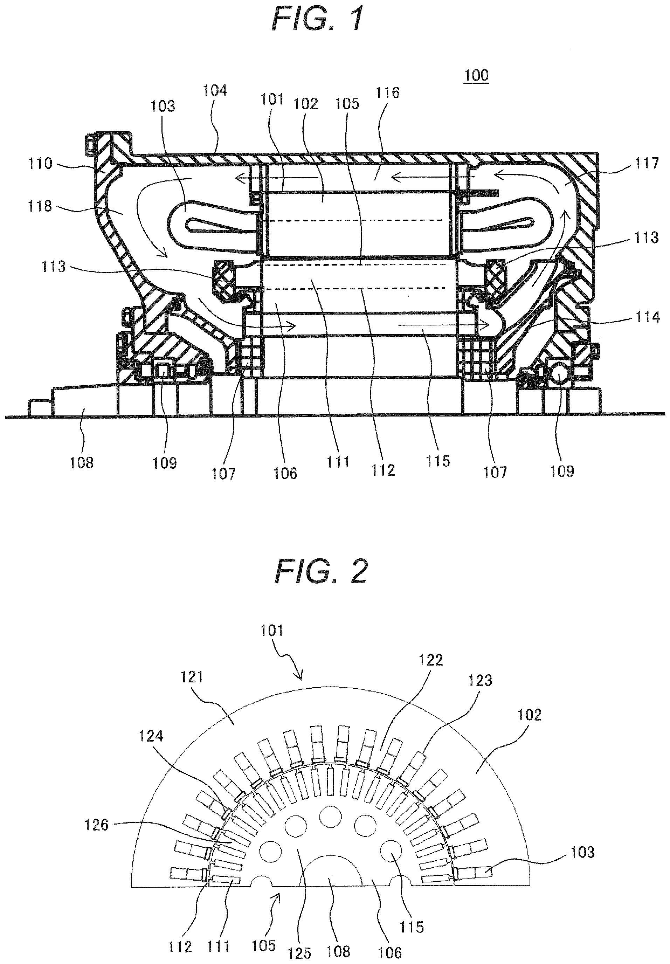

Example 1 of the present invention is described, based on Figures 1 to 4. As for a rotary electric machine in the present example, it is intended for applications including an induction motor, a permanent magnet electric motor, a switched reluctance motor, etc. Figure 1 is a cross-sectional view of a rotary electric machine cut along an axial direction, pertaining to Example 1 of the present invention.

A stator 101 of the rotary electric machine 100 is comprised of a stator core 102, multi-phase stator windings 103 wound over the stator core 102, and a housing 104 with its inner periphery holding the stator core 102.

A rotor 105 is comprised of a rotor core 106, end plates 107, a shaft 108, and bearings 109 and the bearings 109 are rotatably held onto the shaft 108. The bearings 109 are supported by an end bracket 110 and the end bracket 110 is fixed to the housing 104. Also, the rotor core 106 is axially anchored by the end plates 107 at its both ends in the axial direction.

The rotor core 106 of the rotor 105 has plural rotor slots 112 for inserting rotor conductor rods 111 which are made of a conducting body. Also, the rotor conductor rods 111 are connected to end rings 113 at both axial ends of the rotor.

An inner fan 114 for circulation of air inside the rotary electric machine 100 is connected to the end plates 107. Axially penetrating ventilation holes 115 are formed in the inner periphery of the rotor core 106. Also, a ventilating duct 116 is formed on the side of the outer periphery of the stator 101. Spaces 117 and 118 are defined between the ventilation holes 115 and the ventilating duct 116. When the inner fan 114 (fan) provided in the rotor 105 rotates, wind flows as indicated by arrows in order of the space 117, ventilating duct 116, space 118, and ventilation holes 115 to cool the stator 101 and the rotor 105.

Figure 2 is a cross-sectional view of the rotary electric machine cut along a direction orthogonal to the axial direction, pertaining to Example 1 of the present invention (the housing is omitted from the depiction). In Figure 2, the rotary electric machine 100 is comprised of the stator 101 and the rotor 105. The stator 101 is comprised of the stator core 102 and the stator windings 103. The stator windings 103 are wound over the stator core 102.

The stator core 102 includes a cylindrical stator yoke portion 121 and plural stator teeth portions 122 which protrude inward in a radial direction from the surface of the inner periphery of the stator yoke portion 121 and extend in an axial direction along the inner periphery of the stator yoke portion 121. The stator teeth portions 122 are arranged circumferentially at equally spaced intervals along the inner periphery of the stator yoke portion 121.

Stator slots 123 in which the stator windings 103 are to be housed are formed between the stator teeth portions 122. An opening portion is formed in the stator slots 123 and the slots are open toward the rotor 105. The stator windings 103 are housed in the stator slots 123. In the opening portion of the stator slots 123, a wedge 124 is provided to prevent the stator windings 103 from dropping in a gap between the stator 101 and the rotor 105. By this wedge 124, the stator windings 103 are held inside the stator slots 123. The wedge 124 is made of a resin including magnetic powders.

The rotor 105 includes a rotor core 106 made of a laminate of plural magnetic steel sheets, plural rotor slots 112 provided in the rotor core 106, and rotor conductor rods inserted in the rotor slots 112.

The rotor core 106 includes a cylindrical rotor yoke portion 125 and plural rotor teeth portions 126 which protrude outward in a radial direction from the outer periphery surface of the rotor yoke portion 125 and extend in an axial direction along the outer periphery of the rotor yoke portion 125. The rotor teeth portions 126 are arranged circumferentially at equally spaced intervals along the outer periphery of the rotor yoke portion 125. Between the rotor teeth portions 126, also, plural rotor slots 112 for putting the rotor conductor rods 111 therein are arranged circumferentially at equally spaced intervals.

In the rotor core 106, also, the axially penetrating ventilation holes 115 (holes) which are positioned in a radially inner part of the rotor core 106 and a hole for the shaft 108 to pass through are formed. The ventilation holes 115 and the hole for the shaft 108 to pass through, the ventilation holes 115 and the hole for the shaft 108 to pass through are formed by punching magnetic steel sheets. The shaft 108 is inserted in the hole for the shaft 108 to pass through formed by laminating the punched out magnetic steel sheets to configure the rotor 105. The rotor 105 rotates clockwise and counterclockwise for operation as an electric motor.

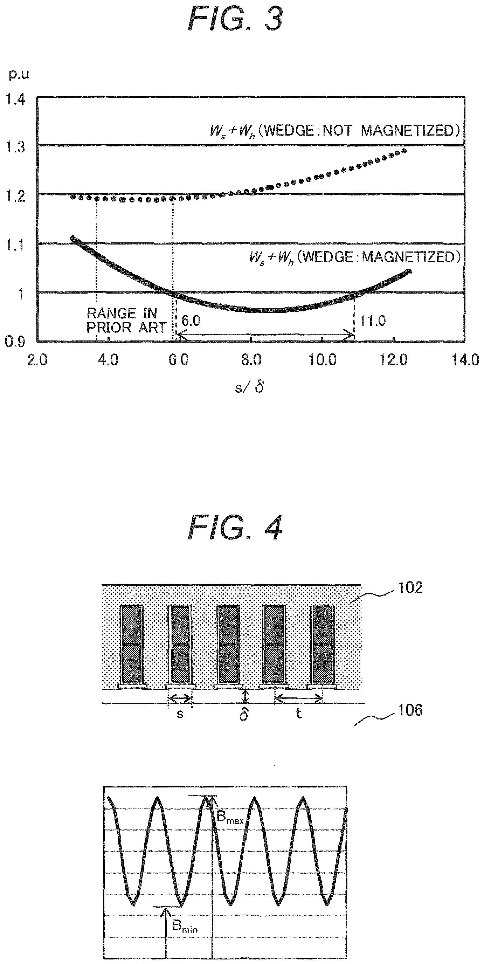

Then, means for reducing the total loss of the rotary electric machine 100 are described. Figure 3 is a diagram representing a relation between a ratio of stator slot width S to gap width $\delta$ between the stator and the rotor pertaining to Example 1 of the present invention and a total value of loss.

Loss described in Figure 3 is the sum (Ws + Wh) of a copper loss Ws occurring when current flows through the stator windings 103 by applying voltage to the stator windings 103 and a harmonic loss Wh occurring in the gap surface between the stator core 102 and the rotor core 106. Also, both the sum in a case where the wedge 124 is magnetized and the sum in a case where the wedge 124 is not magnetized are graphed.

Figure 3 also presents that loss is 1.0 p.u (per unit) in a case where a magnetized wedge is applied as the wedge 124 and the stator slot width S and the gap width $\delta$ in the prior art are applied.

A way of calculating these losses is described. First, deriving the copper loss Ws is described. Because the copper loss Ws increases in proportion to the square of a load current, it can be expressed by Equation (1).
[Equation 1]

$$W_s = 3 \cdot R_s \cdot I^2 \quad \cdots (1)$$

Here, Rs is a resistance value of the stator windings 103 for one phase and I is a current value allowed to flow through the stator windings 103 for one phase. The current value I can be expressed by Equation (2) .
[Equation 2]

$$I \propto k_c \cdot \delta \quad \cdots (2)$$

Kc can be expressed by Equation (3).
[Equation 3]

$$K_c = \frac{t}{t - \gamma \cdot \delta} \quad \cdots (3)$$

Also, $\gamma$ and t can be expressed by Equations (4) and (5) .
[Equation 4]

$$\gamma = \frac{S/\delta}{5 + (S/\delta)^2} \quad \cdots (4)$$

[Equation 5]

$$t = \frac{R_{si}}{N_s} \quad \cdots (5)$$

Here, Rsi is an inside radius of the stator 101 and Ns is the number of the stator slots 123. Thus, the current value can be reduced to a larger extent when the gap width $\delta$ becomes smaller and, therefore, the copper loss Ws can be reduced.

Then, driving the harmonic loss Wh is described.
The harmonic loss Wh is expressed by Equation (6).
[Equation 6]

$$W_h \propto \frac{272}{\sqrt{\mu\rho}}(N_s \cdot n)^{1.5}\left(\frac{\beta \cdot t}{B_{max}}\right)^2 (2\pi R_{si} - SN_s) \cdot L_c \quad \cdots (6)$$

Here, $\mu$ is magnetic permeability of the stator core 102, n is rotating speed of the rotor 105, Lc is axial length of the stator core 102, and Bmax is a maximum value of flux density occurring across the gap width $\delta$. Also, a pulsation rate $\beta$ of flux density occurring across the gap width can be expressed by Equation (7).
[Equation 7]

$$\beta = \frac{B_{max} - B_{min}}{2B_{max}} = \frac{1 + u^2 - 2u}{2(1 + u^2)} \quad \cdots (7)$$

Here, Bmin is a minimum value of flux density occurring across the gap width. Also, flux densities Bmax and Mmin across the gap width can be calculated from Equation (8).
[Equation 8]

$$u = \frac{S}{2\delta} + \sqrt{1 + \left(\frac{S}{2\delta}\right)^2} \quad \cdots (8)$$

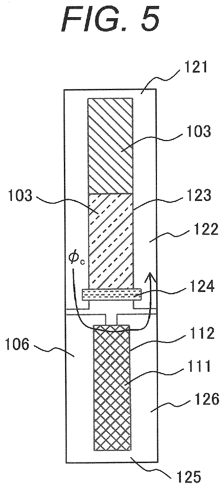

Thus, it is found that the harmonic loss Wh can be reduced to a larger extent when the ratio of the width S of each stator slot 123 to the gap width $\delta$, i.e., S/$\delta$ becomes smaller.
Here, a description is provided about the copper loss Ws and the harmonic loss Wh in a case where a magnetized wedge is applied.
Because magnetic permeability of the magnetized wedge is large than air, magnetic resistance in a width direction of each stator slot 123 in the case where a magnetized wedge is applied becomes smaller than when the wedge is not magnetized. Therefore, the width S' of each stator slot 123 becomes smaller than the slot width S when the wedge is not magnetized. Loss in the case where the magnetized wedge is applied, which is presented in Figure 3, is loss, when taking this into account.
Figure 4 represents a relation between the flux densities Bmax and Mmin occurring across the gap width. When a non-magnetized wedge is used as the wedge attached to the stator slots, there is a large difference between the flux densities Bmax and Mmin occurring across the gap width, as presented in Figure 4. Consequently, more harmonic components are included in the flux density occurring across the gap width and the harmonic loss increases. To counteract this, it is commonly known to increase the gap width to decrease both the flux densities Bmax and Mmin occurring across the gap width and also decrease the difference between Bmax and Mmin, thus reducing the harmonic loss.
On the other hand, because the wedge is magnetized in the present example, the difference between Bmax and Mmin decreases; thereby, it is possible to reduce harmonic components in the flux density occurring across the gap width and reduce the harmonic loss. Also, in the present example, in addition to the foregoing, by decreasing the gap width which was increased in the prior art, both Bmax and Mmin are increased to keep the current value low flowing through the stator windings 103; therefore, it is also enabled to reduce the copper loss.
In the prior art, for the purpose of reducing the harmonic loss, the gap width is enlarged to reduce the harmonic loss; a range in which the sum of the copper loss and the harmonic can be reduced was less than the S/$\delta$ ratio of 6, as graphed for the case without the magnetized wedge in Figure 3.
On the other hand, the wedge 124 that is magnetized is used in the present example and we have found that the ratio ranging from 6 to 11 is preferable as the ratio of the width S of each stator slot 123 to the gap width $\delta$ between the stator 101 and the rotor 105 in order to reduce the sum of the harmonic loss and a fundamental wave loss.
Then, using Figure 5, a description is provided about a structure when a non-magnetized wedge is applied. Figure 5 is an enlarged view of a stator for which a non-magnetized wedge is applied, a slot portion of the rotor, and teeth portions. For convenience, reference numerals that are common with the present invention are assigned.
When a non-magnetized wedge is applied as the wedge 124, interlinkage of flux $\phi c$ occurs in the rotor core 106 and the rotor conductor rod 111 and the flux flows through adjacent stator teeth portions 122. Consequently, a harmonic loss occurs in the rotor core 106 and the rotor conductor rod 111 and this was a factor of decreasing efficiency. As countermeasures against this, in the structure of prior art described in the prior art literature, the flux $\phi c$ depicted in Figure 4 was reduced and the harmonic loss was reduced by making the gap width $\delta$ between the stator 101 and the rotor 105 larger than the width S of each stator slot 123. However, in the technology described in the prior art literature, it is required to increase current and, as a result, the copper loss increases, which posed a problem in which the total loss increases.

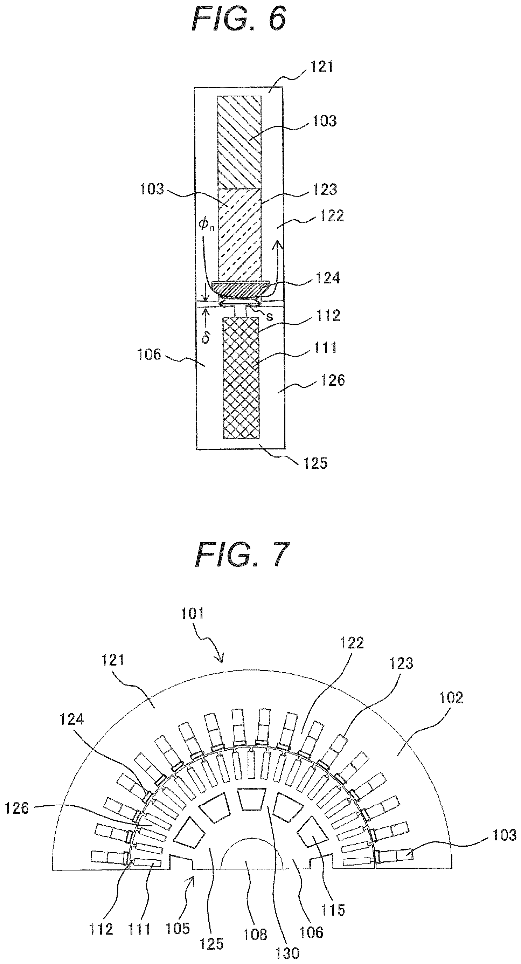

A structure of the present example to solve this problem is described with Figure 6. Figure 6 is an enlarged view of the stator pertaining to Example 1 of the present invention, a rotor slot, and teeth portions.

Features of the present example reside in that a magnetized wedge is applied as the wedge 124 for the stator 101 and in addition, that the width S of each stator slot 123 is smaller than the gap width $\delta$ between the stator 101 and the rotor. In the present example, flux $\phi$n produced in the stator 101 flows via the wedge 124 and flows through adjacent stator teeth portions 122. This reduces the amount of flux interlinkage in the rotor core 106 and the rotor conductor rod 111 and, therefore, the harmonic loss can be reduced and efficiency can be improved. Additionally, in the present example, it is not required to increase current and a resulting increase in the copper loss can be constrained.

As described above, according to the present example, a magnetized wedge is used as the wedge 124 for the stator 101 and the ratio of the width S of each stator slot 123 to the gap width $\delta$ between the stator 101 and the rotor 105, i.e., S/$\delta$ is adapted to range from 6 to 11; therefore, it is possible to reduce both the harmonic loss and the copper loss and it is possible to make the rotary electric machine operate at high efficiency.

Example 2

Then, Example 2 of the present invention is described with Figure 7. Figure 7 is a cross-sectional view of a rotary electric machine cut along a direction orthogonal to the axial direction, pertaining to Example 2 of the present invention (the housing is omitted from the depiction).

Depiction in Figure 7 is the same as Figure 2, except for the shape of the ventilation holes 115; therefore, duplicated description is omitted. In Example 2, the shape of the ventilation holes 115 is made to be a trapezoidal shape in which its radially outer side is larger than its radially inner side.

In the present example, it is possible to decrease the gap width, while improving the efficiency of the rotary electric machine and, therefore, it is possible to increase the outside diameter of the rotor in a case where the inside diameter of the stator is unchanged.

With the ventilation holes 115 having a circular shape, given that the width of a bridge portion between adjacent ventilation holes 115 is constant, it is impossible to increase the diameter of the circular holes even though the outside diameter of the rotor 105 is increased.

On the other hand, in the present example, by making the ventilation holes 115 trapezoidal, it is possible to expand the ventilation holds 115 toward the outside diameter of the rotor 105 while keeping the width of the bridge portion 130 between adjacent ventilation holes constant.

According to the present example, the areas of the ventilation holes 115 can be enlarged and, therefore, it is possible to increase the amount of wind flowing through the ventilation holes 115 and improve cooling performance.

In addition, according to the present example, because there is an increase in the volumes of the ventilation holes 115, the amount of iron used for the rotor core 106 decreases and it is possible to save the weights of the rotor 105 and the rotary electric machine 100.

Example 3

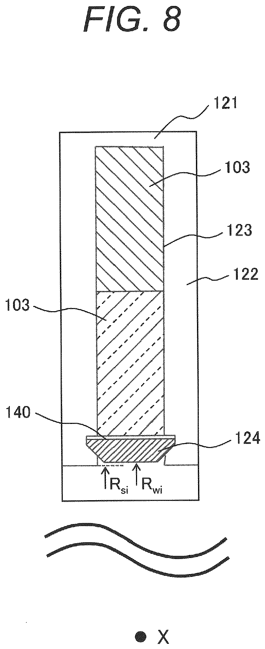

Then, Example 3 of the present invention is described with Figure 8. Figure 8 is an enlarged cross-sectional view of a stator slot pertaining to Example 3 of the present invention. The housing and the rotor are omitted from depiction.

The structure in Figure 8 is similar to the structure of the stator slot depicted in Figure 6. In Figure 8, if X denotes the center of the axis of the rotor 105, Rwi is taken to denote the radius of a gap facing surface (radially inner) of the wedge 124 and Rsi to denote the radially inner radius of the stator core 102 from the center X of the rotor 105. A feature of the present example resides in that the radius Rwi of the gap facing surface (radially inner) of the magnetized wedge 124 is set larger than the radially inner radius Rsi of the stator core 102.

When the wedge 124 has become hot along with temperature rise of the stator windings 103, the wedge 124 deteriorates by heat and its volume decreases, because the magnetized wedge 124 is made by adding a magnetic material to a resin. When the volume of the wedge 124 has decreased, because the wedge 124 has a magnetic property, the wedge 124 vibrates with a leakage flux produced by the stator 101, which could cause breakage of the wedge 124.

In the present example, therefore, the radius Rwi of the gap facing surface (radially inner) of the wedge 124 is set larger than the radially inner radius Rsi of the stator core 102. By this structure, the ventilation area that covers the inside diameter side of the wedge 124 and the gap expands and the ventilation volume of the gap increases. This, in turn, enhances an effect of cooling the wedge 124 and temperature rise of the wedge 124 can be constrained.

According to the present example, it is possible to decrease the temperature of the wedge 124 and, therefore, it is possible to constrain heat deterioration of the wedge 124 and improve the reliability of the rotary electric machine 100.

Example 4

Then, Example 4 of the present invention is described with Figure 8. A feature of the present example resides in that a material of low heat conduction 140 having lower thermal conductivity than the wedge 124 is placed between the magnetized wedge 124 and the stator windings 103.

By sandwiching the material of low heat conduction between the magnetized wedge 124 and the stator windings 103, it is possible to increase thermal resistance between the wedge 124 and the stator windings 103 and, when the stator windings 103 have become hot, heat of the stator windings 103 is restrained from being conducted to the wedge 124 and temperature of the wedge 124 can be constrained.

According to the present example, by constraining the temperature rise of the wedge 124, it is possible to prevent breakage of the wedge 124 and improve the reliability of the rotary electric machine 100.

Example 5

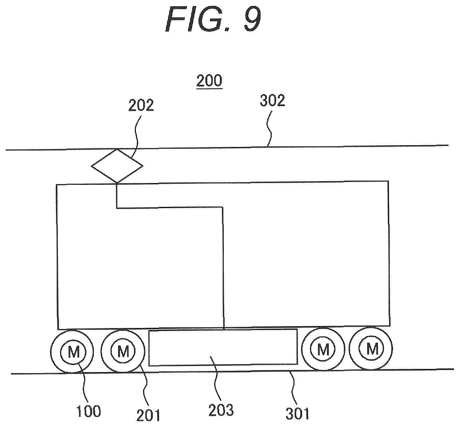

Example 5 of the present invention is described with Figure 9. In Example 5, description is given of an example of application of the rotary electric machine 100 used in Examples 1 to 4 to an electrical motor vehicle. As one example of the electric motor vehicle, an example of application to a railway vehicle is described in Example 5.

Figure 9 is a structural diagram of a railway vehicle in which a rotary electric machine pertaining to Example 5 of the present invention is used.

The railway vehicle 200 includes plural wheels 201 moving on rails 301, a rotary electric machine 100 which drives at least one wheel 201 of the plural wheels 201, a current collector 202 which collects electric power from an overhead wiring 302, current collector 202 and a power converter 203 which converts electric power collected by the current collector 202 and supplies AC power to the rotary electric machine 100.

The rotary electric machine 100 is connected with the axel of the railway vehicle 200 and movement of the railway vehicle 200 is controlled by controlling the rotary electric machine 100. Electrical grounding is performed via the rails 301. Here, voltage of the overhead wiring 302 may be either DC or AC. In addition, instead of supplying electricity from the overhead wiring 302, supplying electricity may alternatively be performed in such a way that a battery is mounded inside the railway vehicle 200 and electric power is supplied from the battery.

Furthermore, technology described in Examples 1 to 4 is applied to the rotary electric machine 100 in Example 5.

According to Example 5, by mounting the rotary electric machine 100 in Examples 1 to 4 in the railway vehicle system, it is possible to achieve downsizing of the railway vehicle driving system and it is possible to drive it at high efficiency.

Also, according to Example 5, it is possible to achieve weight saving of the railway vehicle and reduce its power consumption. Moreover, according to Example 5, by weight saving of the railway vehicle, it possible to provide the railway vehicle that is favorably suited for high-speed running. Furthermore, according to Example 5, by weight saving of the railway vehicle, it is possible to constrain the load on the rails and achieve alleviation of a track maintenance work.

Now, the present invention is not limited to the foregoing examples and various modifications are included therein. The foregoing examples are those described in detail to explain the present invention clearly and the invention is not necessarily limited to those including all components described.

Reference Signs List

100: rotary electric machine, 101: stator, 102: stator core, 103: stator windings, 104: housing, 105: rotor, 106: rotor core, 107: end plate, 108: shaft, 109: bearing, 110: end bracket, 111: rotor conductor rod, 112: rotor slot, 113: end ring, 114: inner fan, 115: ventilation hole, 116: ventilating duct, 117: space, 121: stator yoke portion, 122: stator teeth portion, 123: stator slot, 124: wedge, 125: rotor yoke portion, 126: rotor teeth portion, 130: bridge portion, 140: material of low heat conduction, 200: railway vehicle, 201: wheel, 202: current collector, 203: power converter, 301: rail, 302: overhead wiring

**Claims**

1. A rotary electric machine comprising:

   a stator; and
   a rotor housed in the stator with a gap in between
   the stator including stator windings and a stator core,
   the stator core including stator slots to house the stator windings,

an opening portion being formed in each of the stator slots and a wedge to hold the stator windings being provided in the opening portion,
wherein the wedge is magnetized and a ratio of width S of each of the stator slots to gap width $\delta$, i.e., $S/\delta$ is adapted to range from 6 to 11.

2. The rotary electric machine according to claim 1,
wherein axially penetrating ventilation holes are formed in the rotor core of the rotor, which are positioned in a radially inner part of the rotor core, and the holes are made to be a trapezoidal shape.

3. The rotary electric machine according to claim 2,
wherein the holes are made to be a trapezoidal shape in which its radially outer side is larger than its radially inner side.

4. The rotary electric machine according to claim 2,
wherein a fan is provided in the rotor and wind flows through the holes, produced by rotation of the fan

5. The rotary electric machine according to claim 1,
wherein, when the axis of the rotor is assumed to be a center, the radius of a gap facing surface of the wedge is adapted to be larger than the radially inner radius of the stator core.

6. The rotary electric machine according to claim 1,
wherein a material of low heat conduction having lower thermal conductivity than the wedge is placed between the wedge and the stator windings.

7. The rotary electric machine according to any one of claims 1 to 6,
wherein the rotary electric machine is any of an induction motor, a permanent magnet electric motor, and a switched reluctance motor.

8. An electrical motor vehicle comprising a plurality of wheels, a rotary electric machine which drives at least one of the wheels, and a power converter which converts electric power and supplies AC power to the rotary electric machine, the electrical motor vehicle being equipped with the rotary electric machine described in any one of claims 1 to 6.

9. The electrical motor vehicle according to claim 8,
wherein the vehicle is equipped with a current collector to collect electric power from an overhead wiring and the power converter converts electric power collected by the current collector.

10. The electrical motor vehicle according to claim 8,
wherein the vehicle is equipped with a battery and the power converter converts electric power supplied from the battery.

# FIG. 1

# FIG. 2

## FIG. 3

## FIG. 4

# FIG. 5

# FIG. 6

# FIG. 7

# FIG. 8

121

103

123

122

103

140

124

$R_{si}$  $R_{wi}$

● X

# FIG. 9

## INTERNATIONAL SEARCH REPORT

| International application No. |
|---|
| PCT/JP2018/031016 |

A.  CLASSIFICATION OF SUBJECT MATTER
Int. Cl. H02K3/493(2006.01)i, H02K1/16(2006.01)i, H02K1/22(2006.01)i,
H02K1/32(2006.01)i

According to International Patent Classification (IPC) or to both national classification and IPC

B.  FIELDS SEARCHED

Minimum documentation searched (classification system followed by classification symbols)
Int. Cl. H02K3/493, H02K1/16, H02K1/22, H02K1/32

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 7-123621 A (HITACHI, LTD.) 12 May 1995, paragraphs [0002]-[0016], fig. 1 (Family: none) | 1-10 |
| A | JP 8-172742 A (TOSHIBA CORP.) 02 July 1996, paragraphs [0051]-[0058], fig. 1 (Family: none) | 1-10 |

☐  Further documents are listed in the continuation of Box C.          ☐  See patent family annex.

| | |
|---|---|
| \*  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 05.11.2018 | 20.11.2018 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004312868 A